(19) **Europäisches Patentamt**
**European Patent Office**
**Office européen des brevets**

(11) Veröffentlichungsnummer : **0 148 280**
**B1**

(12) # EUROPÄISCHE PATENTSCHRIFT

(45) Veröffentlichungstag der Patentschrift :
09.09.87

(51) Int. Cl.⁴ : **C 04 B 28/24**, C 04 B 38/02

(21) Anmeldenummer : 83112458.1

(22) Anmeldetag : 10.12.83

(54) **Wasserhaltige härtbare Formmassen auf Basis von anorganischen Bestandteilen und Verfahren zur Herstellung von Formkörpern.**

(30) Priorität : 16.12.82 DE 3246604
16.12.82 DE 3246602
16.12.82 DE 3246619

(43) Veröffentlichungstag der Anmeldung :
17.07.85 Patentblatt 85/29

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
DE-A- 2 513 475
FR-A- 1 518 772
FR-A- 2 010 783
FR-A- 2 085 032
FR-A- 2 336 524
FR-A- 2 389 432
GB-A- 2 099 412
US-A- 3 868 227
CHEMICAL ABSTRACTS, Band 90, Nr. 18, April 1979, Seite 231, Nr. 141503m, Columbus, Ohio, US
CHEMICAL ABSTRACTS, Band 92, Nr. 6, Februar 1980, Seite 282, Nr. 46460c, Columbus, Ohio, US
CHEMICAL ABSTRACTS, Band 90, 1979, Seite 230, Nr. 75740h, Columbus, Ohio, US

(73) Patentinhaber : DYNAMIT NOBEL AKTIENGESELL-SCHAFT
Postfach 1209
D-5210 Troisdorf, Bez. Köln (DE)

(72) Erfinder : Zoche, Günter, Dr.
Königsheimstrasse 13
D-5300 Bonn 3 (DE)
Erfinder : Neuschäffer, Karl-Heinz, Dr.
Boettnerstrasse 6
D-5672 Leichlingen (DE)
Erfinder : Engels, Hans-Werner
Grabenstrasse 53
D-5210 Troisdorf-Sieglar (DE)
Erfinder : Spielau, Paul, Dr.
Van-Gogh-Platz 10
D-5210 Troisdorf-Eschmar (DE)

## Beschreibung

Die Erfindung betrifft fließfähige bzw. preßbare wasserhaltige Formmassen auf Basis von alkalihaltigen anorganischen Bestandteilen, welche durch Gießen oder Pressen in Formen und Erwärmen Formkörper bilden, sowie das Verfahren zur Herstellung von Formkörpern aus diesen Formmassen.

Es ist bekannt, fließfähige wasserhaltige Formmassen auf synthetischem Wege aus anorganischen Stoffen herzustellen und durch Härten in der Wärme hieraus Formkörper zu bilden, wobei als wesentliche Bestandteile Alkalilaugen, Alkaliwasserglas-Lösungen, Metakaolin sowie gegebenenfalls bestimmte Füllstoffe verwendet werden (französische Patentanmeldungen 79.22041 und 80.18970).

Hierbei müssen ganz bestimmte Molverhältnisse von $SiO_2$, von $Al_2O_3$, der Alkalihydroxide und des Wassers eingehalten werden, wobei Alkalilaugen und Alkaliwasserglas als Härter für eine Mischung aus Metakaolin, Alkaliwasserglas und Füllstoffen dienen. Nach diesem Stand der Technik spielt der sogenannte Metakaolin d. h. ein reaktionsfähiges Aluminiumsilikat der ungefähren Summenformel $Al_2O_3 \cdot 2\ SiO_2$, das durch Erhitzen von Kaolinit auf ca. 800 °C erhalten wird, eine besondere Rolle als aktive Komponente zur Bildung eines « polymeren » Alumosilikat-Gerüstes. Metakaolin ist auch der einzige feste Bestandteil, abgesehen von ggf. anwesenden Füllstoffen, sowie die einzige Quelle für den Gehalt an Aluminiumoxid. Die entstandenen Formkörrper nach dem Stand der Technik weisen eine besonderes dreidimensionales anorganisches Polymergerüst aus Alkalialumosilikaten auf.

Diese Formmassen nach dem Stand der Technik erfordern nach dem Vermischen der Ausgangsstoffe eine erhebliche Reifezeit d. h. eine Wartezeit, bis das Formgießen und die Bildung des Formkörpers durch Erwärmen vorgenommen werden kann. Erst nach dem Reifen können diese Formmassen gegossen werden und bilden dann durch Erwärmen einen festen Formkörper aus. Diese Formkörper müssen im Regelfall als Füllstoff Glimmerpulver enthalten, um Rißbildung und Schwindung zu vermeiden. Nachteilig ist weiterhin, daß nur Metakaolin von ganz bestimmter Herkunft, der offenbar einer ganz bestimmten Temperaturbehandlung ausgesetzt war, die Herstellung der fließfähigen Formmasse und eine solche Herstellung der Formkörper gestattet.

Zudem entstehen nur dann geeignete fließfähige Formmassen, wenn bei der Vermischung der Ausgangsstoffe eine bestimmte Reihenfolge der Zugabe eingehalten wird.

Es bestand daher die Aufgabe, teure und schwer beschaffbare Ausgangsstoffe zu vermeiden, die Beschränkung der Vermischbarkeit der Bestandteile zu beseitigen, nach Möglichkeit den teuren Glimmer als Füllstoff zu ersetzen, sowie leichter verarbeitbare Formmassen und verbesserte Formkörper herzustellen.

Es wurde gefunden, daß diese Ziele durch Verwendung einer vergleichsweise geringen Anzahl von einfach beschaffbaren Rohstoffen erreichbar sind.

Gegenstand der Erfindung ist eine wasserhaltige härtbare Formmasse aus anorganischen Bestandteilen in fließfähiger oder pressbarer Verteilung mit gegebenenfalls enthaltenen Anteilen von Füllstoffen, dadurch gekennzeichnet, daß die Formmasse je Gew.-Teile gelöstes $SiO_2$ 0,7 bis 2,5 Gew.-Teile $K_2O$ bzw. 0,55 bis 1,5 Gew.-Teile $Na_2O$ enthält, wobei $K_2O$ bzw. $Na_2O$ aus Alkalihydroxid, dessen wässriger Lösung und/oder einer wässrigen Lösung von Alkalisilikaten und gelöstes $SiO_2$ aus einer wässrigen Lösung von Alkalisilikaten stammt sowie 1,3 bis 10 Gew.-Teile Oxidgemisch mit Gehalten von amorphem $SiO_2$ und Aluminiumoxid und/oder ungelöstes $SiO_2$ aus einer amorphen dispers-pulverförmigen wasserhaltigen Kieselsäure und Wassergehalte bis zum Erreichen der Fließfähigkeit bzw. Preßbarkeit und ggf. Füllstoffgehalte bis zur Grenze der Fließfähigkeit, enthält.

Erfindungsgemäß wird in überraschender Weise der Gehalt von Metakaolin d. h. vorgebildetes Aluminiumsilikat als Bestandteil des anorganischen Polymergerüstes vermieden. Es wurde vielmehr gefunden, daß die Oxide $SiO_2$ und Aluminiumoxid des Oxidgemischs trotz ihrer Unlöslichkeit in Alkalien in der Lage sind, eine anorganische Gerüststruktur zu bilden.

Das amorphe $SiO_2$ des Oxidgemischs, mindestens teilweise auch das Aluminiumoxid des Oxidgemischs und, soweit anwesend, das ungelöste $SiO_2$ der amorphen wasserhaltigen Kieselsäure werden als die reaktiven und steinbildenden festen Bestandteile der Formmasse angesehen, während die Füllstoffe nicht aktiv an der Steinbildung teilnehmen. Diese festen Bestandteile der Formmassen bilden mit den Alkalien und dem gelösten Silikat-Anteil des Alkaliwasserglases im gehärteten Formkörper ein Alkalipolysilikat, in dem offenbar auch teilweise Si durch Al ersetzt sein kann, das als strukturbildender Bestandteil die Füllstoffe umgibt. Der durch Erwärmen gehärtete Formkörper ist frei von Hydratwasser.

Zwar war aus der US-PS 1 587 057 bekannt, geschmolzene Kieselsäure (silica) oder Quarz von stückiger Form zu mahlen und mit Lösungen von Alkalisilikat zu einer Paste anzurühren, die beim Stehenlassen oder Erwärmen zu Formkörpern erstarrt, worauf durch anschließende zeitraubende Behandlung mit konzentrierter Chlorwasserstoffsäure aus den gebildeten Silikaten Kieselsäure in Freiheit gesetzt wird und der Überschuß von Chlorwasserstoffsäure durch wiederum zeitraubende Behandlung mit fließendem Wasser beseitigt oder mit Ammoniumhydroxidlösung neutralisiert wird, worauf erneut getrocknet werden muß.

Die vorliegende Erfindung hebt sich hiervon durch andersartige Bestandteile und die direkte Verwendbarkeit der alkalihaltigen Formkörper ohne jede Nachbehandlung ab. Die Mengenverhältnisse sind in weiten Grenzen variierbar und nur durch die Fähigkeit begrenzt, aus der wasserhaltigen gießbaren oder preßbaren. Formmasse durch Erwärmen zu einem steinartigen Formkörper zu erhärten. Im Regelfalle sollen jedoch in den erfindungsgemäßen Formmassen 1,3 bis 7,5 Gew.-Teile, vorzugsweise 2 bis 6 Gew.-Teile, sehr bevorzugt 3,2 bis 5,5 Gew.-Teile Oxidgemisch bzw. $SiO_2$ aus amorpher wasserhaltiger Kieselsäure und 0,7 bis 2,5 Gew.-Teile, vorzugsweise 0,8 bis 1,6 sehr bevorzugt 0,85 bis 1,4 Gew.-Teile $K_2O$ oder die hierzu äquivalenten Mengen 0,50 bis 1,5, vorzugsweise 0,55 bis 1,2 Gew.-Teile $Na_2O$ oder sowohl $K_2O$ als auch $Na_2O$ in entsprechenden äquivalenten Anteilen je Gewichtsteil gelöstes $SiO_2$ aus Alkalisilikat-Lösungen enthalten sein.

Soweit neben $K_2O$ auch $Na_2O$ vorhanden ist, soll die Gesamtmenge der Alkalien entsprechend ihren Äquivalentmengen den für $K_2O$ genannten Gewichtsteiler entsprechen. Das ungelöste $SiO_2$ stammt aus dem amorphes $SiO_2$ enthaltenden Oxidgemisch sowie gegebenenfalls aus amorpher, dispers-pulverförmiger wasserhaltiger Kieselsäure, welche beispielsweise durch Fällung erhältlich ist.

Der Anteil von $K_2O$ und/oder $Na_2O$ kann aus Alkalisilikat-Lösungen, welche gewöhnlich als Alkaliwasserglas bezeichnet werden, oder ganz bzw. teilweise aus festem Kaliumhydroxid und/oder Natriumhydroxid oder deren Lösungen stammen. Nach einem weiteren erfindungsgemäßen Verfahrensweg des Herstellverfahrens kann das Alkaliwasserglas durch Auflösen der amorphen dispers-pulverförmigen wasserhaltigen Kieselsäure in oder mit Alkalihydroxid oder dessen wässrigen Lösungen ganz oder teilweise erhalten werden, wobei der ungelöste Anteil an $SiO_2$ jedenfalls als amorphes $SiO_2$ enthaltendes Oxidgemisch und gegebenenfalls teilweise als amorphe dispers-pulverförmige wasserhaltige Kieselsäure zuzusetzen ist. Der Wassergehalt der Formmassen, welcher bei Anwesenheit von amorpher dispers-pulverförmiger wasserhaltiger Kieselsäure aus deren Wassergehalt bzw. deren Feuchte, dem Wassergehalt der Alkalisilikat-Lösung sowie gegebenenfalls bei Verwendung von Alkalihydroxid-Lösungen aus diesen stammt, wird empirisch bestimmt und soll nicht höher sein als die Fließfähigkeit der Formmasse bzw. die unter Druck erfolgende Verpressung von preßfähigen Formmassen erfordert, wobei auch gegebenenfalls vorhandene inerte Füllstoffe bezüglich der Fließfähigkeit zu berücksichtigen sind. Im allgemeinen wird der Wassergehalt 20 bis 65 Gew.-% Wasser, bezogen auf die aktiven d. h. steinbildenden Bestandteile, d. h. ohne Berücksichtigung der Füllstoffe betragen, wobei Wassergehalte von 26 bis 58 Gew.-% bevorzugt sind. Die Untergrenze und die Obergrenze des Wassergehalts ist durch die Härtbarkeit zu steinartigen Formkörpern sowie die Verpreßbarkeit gegeben. Größere als notwendige Wassergehalte vermindern die Wirtschaftlichkeit und Festigkeit der Formkörper.

Das in der Formmasse und dem Formkörper enthaltene Alkali kann auf einem Gehalt an $K_2O$ oder $Na_2O$ oder beiden Alkalioxiden basieren. $K_2O$ ist als alleiniger oder überwiegender Bestandteil bevorzugt, obgleich auch der Alkaligehalt vollständig aus $Na_2O$ bestehen kann, wobei jedoch eine längere Härtezeit und schlechtere physikalische Eigenschaften der hergestellten Formkörper auftreten können.

Als wässrige Lösungen von Alkalisilikaten sind bevorzugt die bekannten stark Alkalischen wässrigen Lösungen von Alkaliwasserglas d. h. von im Schmelzfluß erstarrten glasigen wasserlöslichen alkalisilikaten, welche durch Zusammenschmelzen von Quarzsand und Alkalicarbonaten bzw. -hydroxiden in stark wechselnden Mengen von $SiO_2$ und Alkalioxid erhalten werden. Bei Molverhältnissen von 1,5 bis 5 Mol $SiO_2$, vorzugsweise 2 bis 4 Mol $SiO_2$, je Mol Alkalioxid sind bei Wasserglaslösungen 28 bis 43 Gew.-%ige, bei Natronwasserglaslösungen bis 60 Gew.-%ige wässrige Lösungen üblich, wobei die wasserärmeren Lösungen bevorzugt sind. Im Sinne der vorliegenden Erfindung kann eine wässrige Lösung von Alkalisilikat auch durch Auflösen der amorphen, dispers-pulverförmigen wasserhaltigen Kieselsäure in Alkalihydroxid-Lösungen oder gegebenenfalls durch Zugabe von festem Alkalihydroxid unter Verflüssigung beim Rühren erhalten werden. Die amorphe Kieselsäure geht häufig in exothermer Reaktion in Lösung, so daß während der Herstellung einer solchen Alkalisilikat-Lösung erforderlichenfalls zu kühlen ist. Eine Filtration oder Reinigung ist trotz der häufig erheblichen Gehalte von Verunreinigungen bei Einsatz amorpher wasserhaltiger Kieselsäure für die Verwendung im Rahmen der vorliegenden Erfindung nicht erforderlich. So hergestellte Alkalisilikat-Lösungen weisen bei gleichem Alkali/$SiO_2$-Verhältnis vielfach nicht gleiche Fließfähigkeit bzw. Viskosität wie handelsmäßige Alkalisilikat-Lösungen von der Art des Wasserglases auf, vermutlich weil das $SiO_2$ nicht als die gleiche Art oder Verteilung von Oligosilikaten vorliegt. In überraschender und vorteilhafter Weise hat die so hergestellte Alkalisilikat-Lösung trotz des Vorhandenseins von Verunreinigungen gute Eigenschaften als Bestandteil der steinbildenden Formmassen.

Das Oxidgemisch mit Gehalten von amorphem $SiO_2$ und Aluminiumoxid hat stark wechselnde Gehalte beider Oxide, deren gemeinsamer Anteil häufig 75 bis über 90 Gew.-% des Oxidgemischs beträgt, wobei aber auch geringere Gehalte als 75 Gew.-% und höhere Gehalte sonstiger Oxide möglich sind. Das Oxidgemisch ist wasserfrei. Es besteht ausschließlich oder ganz überwiegend aus Gemischen von Oxiden.

Solche Oxidgemische entstehen typischerweise bei industriellen Hochtemperatur-Schmelzprozessen als Stäube und bilden zunächst eine Dampf- oder Gasphase, aus der sie beim Abkühlen als feinverteilter Staub abgeschieden werden. Häufig entsprechen die Oxidgemische nicht der Zusammensetzung des industriellen Schmelzprodukts.

Im Röntgenogramm finden sich keine Hinweise auf kristallines $SiO_2$, während $Al_2O_3$ kristallin zumindest zum Teil als $\alpha$-$Al_2O_3$ (Korund) und in wechselnden Anteilen als alkalihaltiges $\beta$-$Al_2O_3$ vorliegt. Eisenoxide können anwesend sein, z. B. als $Fe_2O_3$. Erdalkalien, besonders CaO, sind gegebenenfalls in geringen Mengen anwesend. Geringe Anteile von Fluoriden, $P_2O_5$ oder $ZrO_2$ können in Abhängigkeit vom jeweiligen Schmelzprodukt vorkommen.

Die Oxidgemische können 7 bis 75 Gew.-% $SiO_2$ und 12 bis 87 Gew.-% $Al_2O_3$ enthalten, wobei hohe $SiO_2$-Gehalte oder hohe $Al_2O_3$-Gehalte je nach Art des Schmelzprozesses, jedoch auch bei demselben Schmelzprozeß am Beginn oder Ende einer « Ofenreise » auftreten können. Geeignete Oxidgemische entstehen bei Schmelzprozessen der Herstellung verschiedener Korund-Typen, des Mullits gegebenenfalls auch bei der Herstellung von elementarem Silicium, Ferrosilicium oder bei der Metallverhüttung.

Kennzeichnend für die Verwendbarkeit der Oxidgemische gemäß der Erfindung ist die Unlöslichkeit in Alkalihydroxid-Lösungen bei Herstellung der Formmasse und die Reaktionsfähigkeit mit wässriger Alkalisilikat-Lösung in wasserhaltigen Formmassen als steinbildender Bestandteil der Formkörper bei den Temperaturen der Härtung.

Die amorphe dispers-pulverförmige wasserhaltige Kieselsäure liegt als lagerfähiges und rieselfähiges Pulver, filterfeucht oder als breiiges Gel vor.

Der Wassergehalt kann 20 bis 60 Gew.-% oder gegebenenfalls mehr betragen, wobei die Trockensubstanz zu 85 bis 100 Gew.% analytisch als $SiO_2$ bestimmt wird, neben insbesondere kleineren Anteilen von Aluminiumoxid, Eisenoxid, Metallfluoriden, ggf. Ammoniumfluorid sowie Glühverlust. Solche amorphen dispers-pulverförmigen wasserhaltigen Kieselsäuren werden im allgemeinen durch Fällung aus wässrigen Lösungen erhalten, beispielsweise bei der Gewinnung und Reinigung mineralischer Ausgangsstoffe der Aluminiumindustrie beispielsweise bei der Umsetzung von $H_2SiF_6$ zu Alkalifluoriden oder Kryolith oder auch aus anderweitig erhaltenen wässrigen Silikatlösungen. Bei diesen in zahlreichen industriellen Prozessen abzutrennenden amorphen wasserhaltigen Kieselsäuren kommt es für den hier beschriebenen Verwendungszweck nur darauf an, daß wasserhaltige Kieselsäuren d. h. hydratisierte nichtoxidische Kieselsäuren in amorpher, feinverteilter und in beschriebener Weise reaktionsfähiger Form vorliegen.

Füllstoffe können in Mengen bis zu 1 000 g, vorzugsweise bis 400 g, je 100 g der steinbildenden Komponenten in der Formmasse enthalten sein. In sehr vorteilhafter Weise sind erfindungsgemäß sehr vielfältige Füllstoffe, vorzugsweise anorganische Stoffe in gemahlener oder verteilter Form möglich, beispielsweise Gesteinsmehle, Basalte, Tone, Feldspäte, Glimmermehl, Glasmehl, Quarzsand oder Quarzmehl, Bauxitmehl, Tonerdehydrat, Abfälle der Tonerde-, Bauxit- oder Korundindustrie, Aschen, Schlacken, Fasermaterialien sowie zahlreiche weitere inerte und nicht wasserlösliche mineralische sowie gegebenenfalls organische Materialien. Die Füllstoffe bilden mit den reaktionsfähigen steinbildenden Anteilen der Masse einen guten Verbund, sind aber im eigentlichen Sinne keine Reaktionspartner.

Überraschenderweise benötigen die Formmassen gemäß der Erfindung nach der Herstellung keine Reifezeit.

Durch Fehlen der Reifezeit ist unmittelbar nach der Herstellung der Formmasse und der Formgebung die Härtung zu Formkörpern durch Erwärmen möglich und zwar bei relativ niedriger Temperatur im Vergleich zum Herstellen von Keramik durch Brennen.

Die Formmassen sind bei genügenden Wassergehalten fließfähig und gießbar oder bei geringeren Wassergehalten unter Anwendung von Preßdruck formbar.

Bei fließfähigen Formmassen kann eine Anhärtung durch Erwärmen in der Form, bis eine genügende « Grunfestigkeit » erreicht ist, die das Entformen gestattet, erfolgen. Die Formmassen der Erfindung erlauben somit in vorteilhafter Weise eine Kostenersparnis durch frühzeitige Entformbarkeit, wobei sich eine Aushärtung in der Wärme bis zum Erreichen der jeweils besten physikalischen Eigenschaften anschließen kann. Die Aushärtung fließfähiger Formmassen in der Form ist ebenfalls möglich. Bei aus Preßmassen unter Druck hergestellten Preßkörpern kann stets die Härtung in wirtschaftlicher Weise nach der Entformung erfolgen.

Die Temperatur der Härtungsvorgänge und die Härtungszeiten sind erheblich von der Zusammensetzung der Formmasse und gegebenenfalls von Art und Menge der Füllstoffe abhängig. Die Härtungstemperaturen liegen jedoch höchstens bei 200 °C und ermöglichen damit den Vorteil der Energieersparnis gegenüber zahlreichen traditionellen Erzeugnissen z. B. der Baukeramik.

Die Temperaturen der Härtung liegen allgemein bei 50 bis 200 °C. Soweit die Anhärtung in der Form erfolgt, sind Temperaturen von 50 bis 150 °C, vorzugsweise 60 bis 90 °C erforderlich. Nach der Entformung kann sich gegebenenfalls eine weitere Härtung bei 80 bis 200 °C anschließen. Übliche Härtungszeiten liegen zwischen 0,1 und 5 Stunden.

Der erforderliche Preßdruck liegt bei der Verpreßung je nach Konsistenz der Formmassen im Bereich von 10 bis 500 bar.

Bei der Härtung erfolgt im Regelfalle kein Wasserverlust. Die Trocknung erfolgt ohne Hilfe technischer Maßnahmen von selbst bei der Lagerung an Luft.

Eine Einfärbung ist möglich und unterliegt wegen der geringen Temperatur bei der Härtung keinen Einschränkungen.

Weiterer Gegenstand der Erfindung sind daher Verfahren zur Herstellung von Formkörpern aus den erfindungsgemäßen Formmassen nach den Patentansprüchen 8 bzw. 9.

Die Herstellung der Formmassen erfolgt durch Einrühren der festen Bestandteile in die flüssigen Bestandteile, wobei für gute Durchmischung mit Hilfe eines Rührers gegebenenfalls durch Kneten Sorge zu tragen ist. Erforderlichenfalls werden die festen Bestandteile in Pulverform in Portionen oder über längere Zeit zugegeben und homogen verteilt. Die Komponenten können in beliebiger Reihenfolge miteinander vermischt werden.

Die Formkörper erreichen durch die Härtung Biegebruchfestigkeiten im Bereich von 250 bis 350 kg/cm² oder gegebenenfalls mehr, d. h. Werte wie bisher nur durch die aufwendigen Prozesse bei der Herstellung keramischer Platten oder Klinker bzw. bei Schieferplatten erhältlich. Die Druckfestigkeit der Formkörper ist hoch.

Die Formkörper ermöglichen eine sehr gute Formtreue und geben jede Einzelheit der Form genau wieder, so daß auch sehr dünne Formkörper, vorgegebene Oberflächenstrukturen, Aussparungen und Hinterschneidungen maßgenau wiedergegeben werden.

Die Neigung zur Rißbildung und Formschwindung ist sehr gering, so daß besonders auch Formkörper von großen Dimensionen und großflächige flache Formkörper herstellbar sind.

Die Formkörper sind bohrbar und ermöglichen, soweit gewollt, eine nachträgliche Bearbeitung der Oberfläche durch z. B. Schleifen, Fräsen oder Polieren. Diese Eigenschaften ermöglichen die Verwendung der Formkörper für zahlreiche technische Verwendungszwecke die bisher hocherhitzten z. B. keramischen Formkörpern vorbehalten sind. Eine weitere Verwendung ist als hochwertige Formkörper im Bereich des Hochbaus vorgesehen, beispielsweise als Platten für die Verkleidung und/oder den Aufbau von Wänden oder für die Deckung von Dächern, z. B. in der Art von Schieferplatten, Klinkern, Bekleidungen o. ä., wobei im Gegensatz zu bekannten Materialien besonders durch die hohe Biegebruchfestigkeit auch dünne Formkörper von größeren Abmessungen als bisher verwendbar sind, beispielsweise Verkleidungselemente von der Größe mehrerer Schieferplatten, Klinkern od. dgl.

Darüber hinaus wurde gefunden, daß durch Zusatz von Schäummitteln, insbesondere gasabgebenden Mitteln, die bei Temperaturen zwischen 20 und 95 °C Gas abgeben, in einfacher und wirtschaftlicher Weise leichtgewichtige geschäumte Formkörper hergestellt werden können.

Gegenstand der Erfindung sind auch schäumbare wasserhaltige härtbare Formmassen aus anorganischen Bestandteilen mit gegebenenfalls enthaltenen Anteilen von Füllstoffen, die 1,5 bis 10 Gew.-Teile Oxidgemisch mit Gehalten von amorphem $SiO_2$ und Aluminiumoxid und 0,7 bis 2,5 Gew.-Teile $K_2O$ bzw. 0,55 bis 1,5 Gew.-Teile $Na_2O$ je Gew.-Teile gelöstes $SiO_2$, Wassergehalte und gegebenenfalls Füllstoffgehalte bis zur Grenze der Fließfähigkeit und Schäummittel enthalten, wobei das Oxidgemisch gegebenenfalls durch $SiO_2$ aus amorpher dispers-pulverförmiger wasserhaltiger Kieselsäure ersetzt ist, $K_2O$ bzw. $Na_2O$ aus Alkalihydroxid, dessen wässriger Lösung und/oder einer wässrigen Lösung von Alkalisilikaten und gelöstes $SiO_2$ aus einer wässrigen Lösung von Alkalisilikaten stammt.

Bei der Härtung erfolgt nur eine unerhebliche Schwindung. Der Formkörper ermöglicht eine exakte Abbildung der Form. Erfindungsgemäß sind geschäumte Formkörper mit hoher Temperaturbeständigkeit bis 800, 1 000 oder auch 1 200 °C aus wasserhaltigen schäumbaren anorganischen Formmassen herstellbar, wobei dieses von der Art und Menge des zugesetzten Fillstoffes abhängt.

Als Schäummittel werden Stoffe verwendet, die bei der zur Härtung erforderlichen Temperaturerhöhung oder bei Einwirkung des Wassers eine genügende Menge von Gasen bilden.

Die Art und Menge der Schäummittel wird so ausgewählt, daß bei der Erhöhung der Temperatur zum Zweck der Härtung die Gasbildung abgeschlossen ist, bevor durch die eintretende Härtung der Formkörper zu seiner bleibenden Gestalt verfestigt ist.

Die gasbildenden Schäummittel sollen daher bei oder oberhalb Zimmertemperatur bzw. der durch Herstellung der Formmassen entstehenden Temperatur und unterhalb der anzuwendenden Härtungstemperatur das zum Verschäumen dienende Gas abgeben.

Im allgemeinen soll die Temperatur der Gasbildung der Schäummittel zwischen 20 und 95 °C liegen.

Des weiteren ist es möglich, geschäumte Formkörper durch direkte Zugabe von Gasen, wie $N_2$, Luft in die Masse herzustellen. Hierbei sind die Gase durch Zugabe von Emulgatoren z. B. Netzmitteln, fein zu verteilen und ggf. der Schaum bis zur Aushärtung durch geeignete Stoffe zu stabilisieren. Solche Stoffe sind z. B. geeignete Verdickungsmittel.

Als gasbildende Schäummittel sind besonders das sogenannte Natriumperborat, einer Additionsverbindung aus Natriumborat und Wasserstoffperoxid oder Aluminiumpulver, in phlegmatisierter oder unphlegmatisierter Form bevorzugt.

Die Menge der Schäummittel hängt stark von der Dichte des Schaumkörpers, von dessen zu erzielender Festigkeit und der Art des Schäummittels ab. Geeignete Mengen des Perborats liegen zwischen 0,5 und 4 Gew.-%, vorzugsweise 0,7 bis 3,4 Gew.-% der Formmasse. Geeignete Mengen Al-Pulver, das eine große Menge Wasserstoffgas je Gewichtseinheit liefert, liegen zwischen 0,05 und 0,8 Gew.-%, vorzugsweise 0,1 bis 0,6 Gew.-% der Formmasse. Bei allen Schäummitteln sind für besondere Zwecke auch kleinere oder größere Mengen möglich. Das mit einem bei Normaltemperatur nicht angreifbaren Oberflächenfilm phlegmatisierte Al-Pulver verschäumt bei Temperaturen z. B. 60 bis 90 °C. Soweit der Beginn des Schäumens bei niedrigen Temperaturen nicht hinderlich ist, kann unphlegmatisiertes Al-Pulver, verwendet werden.

Weitere gasbildende Schäummittel wie anorganische oder organische Peroxide, die unter Einwirkung von Wasser und/oder der Erwärmung bei der Härtung zerfallen, Persulfat, oder Percarbonate, $H_2O_2$, weitere Peroxiverbindungen od. dgl. können verwendet werden.

Die Schäumzeiten sind durch die Art und Menge der Schäummittel stark beeinflußbar innerhalb von 10 Minuten bis 3 Stunden, jedoch sind lange Schäumzeiten nur bei großen Formkörpern nötig, deren Inneres sich bei der Härtung erst langsam erwärmt.

Gegebenenfalls können auch Gase wie $N_2$, Luft u. a. eingebracht, durch Rühren verteilt und mit z. B. Emulgatoren verteilt werden.

Die Formmassen gemäß der Erfindung benötigen überraschend nach der Vermischung keine Reifezeit. Durch Fehlen der Reifezeit ist unmittelbar nach der Herstellung der Formmasse und der Formgebung die Härtung zu Formkörpern durch Erwärmen möglich.

Der Wassergehalt braucht nur so groß zu sein, daß eine genügende Fließfähigkeit erreicht wird.

Bei schäumbaren Formmassen erfolgt das Verschäumen und gleichzeitig bzw. danach durch weiteres Erwärmen die Anhärtung in der Form, bis eine genügende Festigkeit erreicht ist, die das Entformen gestattet. Die Formmassen der Erfindung erlauben gegebenenfalls eine frühzeitige Entformung und anschließende Aushärtung in der Wärme. Bevorzugt erfolgt die Aushärtung in der Form.

Die Temperatur der Härtungsvorgänge und die Härtungszeiten sind von der Zusammensetzung der Formmasse, von der Art des Schäummittels und gegebenenfalls von Art und Menge der Füllstoffe abhängig. Die Härtungstemperaturen liegen jedoch höchstens bei 200 °C und ermöglichen damit den Vorteil der Energieersparnis gegenüber zahlreichen traditionellen Erzeugnissen z. B. der Baukeramik.

Die Temperaturen der Härtung liegen allgemein bei 50 bis 200 °C. Für die Anhärtung in der Form sind Temperaturen von 50 bis 150 °C, vorzugsweise 60 bis 95 °C erforderlich. Solange während des Anhärtens die Schäumung erfolgt und der Formkörper noch nicht die endgültige Gestalt gebildet hat, soll eine Temperatur eingehalten werden, bei der sich kein Wasserdampf bildet. Nach der Entformung kann sich eine Aushärtung bei 70 bis 200 °C, vorzugsweise bei 80 160 °C anschließen. Übliche Härtungszeiten liegen zwischen 0,1 und 3 Stunden.

Bevorzugt wird die Form nur soweit gefüllt, daß der geschäumte feste Formkörper die Form vollständig füllt, was durch Vorversuche zu ermitteln ist. Da bei der Härtung keine Schwindung auftritt, können so alle Einzelheiten der Form sehr genau im Formkörper abgebildet werden.

Die Trocknung erfolgt ohne Hilfe technischer Maßnahmen von selbst bei der Lagerung an Luft oder bei erhöhter Temperatur.

Eine Einfärbung ist möglich und unterliegt wegen der geringen Temperatur bei der Härtung keinen Einschränkungen.

Die Farbstoffe sollen beständig gegenüber den Schäummitteln und gegenüber Alkali sein.

Weiterer Gegenstand der Erfindung ist daher ein Verfahren zur Herstellung der erfindungsgemäßen Formkörper nach dem Patentanspruch 10 und in vorteilhaften Weiterbildungen gemäß den Ansprüchen 11 bis 14.

Die Komponenten können in beliebiger Reihenfolge miteinander vermischt werden. Die festen Bestandteile und die flüssigen Bestandteile werden mit Hilfe eines Rührers oder gegebenenfalls durch Kneten gut gemischt. Erforderlichenfalls werden die festen Bestandteile in Pulverform in Portionen oder über längere Zeit zugegeben und homogen verteilt. Wenn erforderlich, werden die Schäummittel erst kurz vor dem Gießen der Formmasse eingearbeitet.

Die geschäumten Formmassen werden besonders zweckmäßig mit einem Gewichtsverhältnis des Oxidgemischs zu Alkalisilikat-Lösung von 0,5 : 1 bis 3 : 1 hergestellt. Die Alkalisilikat-Lösung wird bevorzugt aus amorpher wasserhaltiger Kieselsäure hergestellt.

Die Formkörper erreichen durch die Härtung hohe Temperaturbeständigkeit bis 1 000, teils bis 1 200 °C, d. h. Werte wie bisher nur durch die aufwendigen Prozesse bei der Herstellung keramischer Platten oder Klinker bzw. bei Naturstein erhältlich. Die Schaumkörper haben Dichten von 100 bis 1 000, vorzugsweise 200 bis 800 kg/m$^3$.

Im Rahmen der Erfindung können die Formkörper ganz oder zum Teil aus geschäumtem Material bestehen. Besonders können die Formkörper aus einem flächigen geschäumten Teil und einem flächigen massiven Teil bestehen, der z. B. die Sichtfläche bildet.

Der massive Teil kann aus einem beliebigen Material, wie Keramik, Natur- oder Kunststein, Metall oder Kunststoffen bestehen. Bevorzugt besteht der massive Teil aus Ton- bzw. Keramikmassen wie Fliesen, Kacheln oder Klinkern, aus Naturstein oder Kunststein oder ist aus einer erfindungsgemäßen Formmasse ohne oder mit geringer Schäummittelmenge hergestellt, auf welchen ein angegossener Schaumkörper fest verankert wird. Durch Profile, Stege od. dgl. an dem massiven Teil kann erforderlichenfalls eine zusätzliche Verankerung bewirkt werden. Soweit der Schaumteil ungenügend haftet, kann eine Verklebung vorgesehen werden.

Der geschäumte Teil kann auf den fertigen massiven in die Form eingelegten Teil aufgegossen werden.

Eine gleichzeitige Herstellung — naß in naß — von Schaumteil und massivem Teil ist bei härtbaren massiven Teilen möglich, besonders soweit diese aus Formmassen mit Zusammensetzungen entsprechend der Erfindung unter Fortlassen der Schäummittel hergestellt werden. Die Formkörper besitzen eine sehr gute Formtreue.

Die Neigung zur Rißbildung und Formschwindung ist sehr gering, so daß besonders auch Formkörper von großen Dimensionen und großflächige Hinterschäumungen herstellbar sind.

Die Formkörper sind bohrbar bzw. sägbar und ermöglichen, soweit gewollt, eine nachträgliche Bearbeitung der Oberfläche durch z. B. Schleifen oder Fräsen.

Diese Eigenschaften ermöglichen die Verwendung der Formkörper für zahlreiche technische Verwendungszwecke die bisher hocherhitzten z. B. keramischen Formkörpern vorbehalten sind. Eine weitere Verwendung ist als hochwertige Formkörper im Bereich des Hochbaus vorgesehen, beispielsweise als Platten für die Verkleidung und/oder den Aufbau von Wänden oder für die Deckung von Dächern, z. B. in der Art von Platten, Klinkern, Bekleidungen, o. ä., wobei im Gegensatz zu bekannten Materialien durch besonders die hohe Biegebruchfestigkeit auch dünne Formkörper von größeren Abmessungen als bisher verwendbar sind, beispielsweise Verkleidungselemente von der Größe mehrerer Platten, Klinkern od. dgl.

Die Schaumkörper sind als Wärmedämmung und Schalldämmung vorteilhaft einsetzbar und lassen sich mechanisch z. B. durch Sägen erforderlichenfalls leicht bearbeiten.

In der Zeichnung werden die aus den Formmassen hergestellten Formkörper gemäß der Erfindung in Ausführungsbeispielen schematisch gezeigt und anhand dieser noch näher erläutert. Es zeigen :

Figur 1  einen rechteckigen Formkörper aus einer massiven Deckschicht und einer damit verbundenen Schaumschicht,

Figur 2  einen beispielsweise für eine Rohrisolierung verwendbaren Schaumkörper in Form eines Halbzylinders,

Figur 3  einen rechteckiger Formkörper aus einer massiven, mit einem erhabenen Relief versehenen Deckschicht und einer wärmeisolierenden durch Aufgießen einer schäumbaren Formmasse hergestellten Schaumschicht.

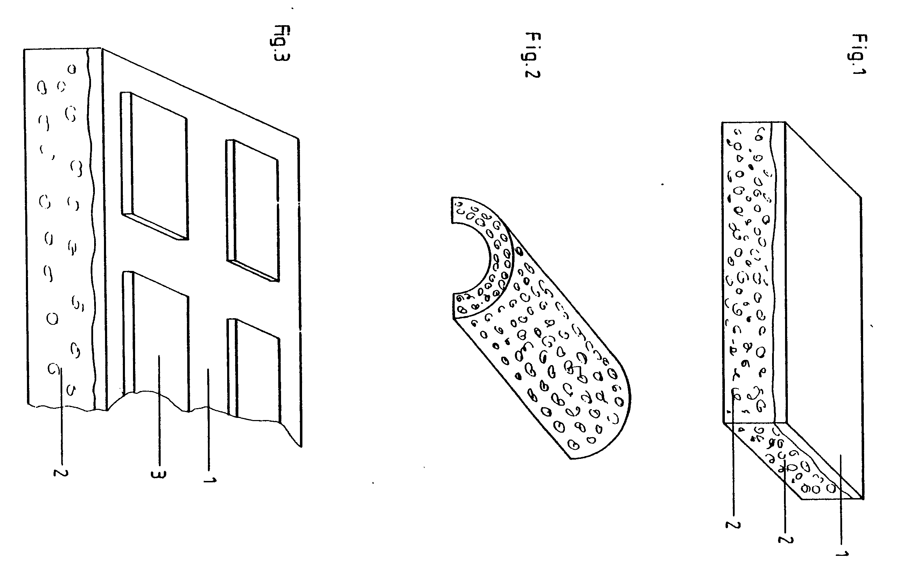

Der in einer perspektivischen Ansicht dargestellte Formkörper der Fig. 1 weist eine massive ungeschäumte Deckschicht 1 aus einer anorganischen Formmasse und eine durch Aufgießen einer schäumbaren Formmasse in dieselbe Form hergestellte Schaumschicht 2 auf, die nach dem Härten fest mit der massiven Deckschicht verbunden ist.

Figur 2 zeigt einen Schaumkörper in Form eines Halbzylinders, der zusammen mit einem zweiten gleichen Halbzylinder als umhüllende Wärmeisolierung beispielsweise eines Rohres oder eines Kessels, verwendbar ist.

Figur 3 zeigt einen rechteckigen Formkörper aus einer Schaumschicht 2 und einer massiven Deckschicht 1, welche auf der Sichtfläche eine daraus hervorragende Profilierung 3 aufweist. Ein solcher Körper kann beispielsweise aus einem vorgefertigten keramischen Körper, der die Deckschicht 1 mit Profilierung darstellt, durch Aufgießen einer schäumbaren Formmasse auf den keramischen Körper und Härten zu einem Schaumkörper hergestellt werden.

Die Erfindung wird nachfolgend an Beispielen erläutert :

Beispiele

In den folgenden Beispielen wurden für Gießmassen und Preßmassen die folgenden Ausgangsstoffe verwendet :

Kaliumsilikatlösung I (Kaliwasserglas) :
26,6 Gew.-% $SiO_2$ 14,5 Gew.-% $K_2O$ und 58,9 Gew.-% $H_2O$
Kaliumsilikatlösung II (Kaliwasserglas) :
25,0 Gew.-% $SiO_2$ 13,6 Gew.-% $K_2O$ und 61,4 Gew.-% $H_2O$
Natriumsilikatlösung (Natronwasserglas) :
29,2 Gew.-% $SiO_2$ 8,8 Gew.-% $Na_2O$ und 62,0 Gew.-% $H_2O$

wasserhaltige disperse Kieselsäuren :

| | | I | II |
|---|---|---|---|
| $SiO_2$ | Gew.-% | 40,5 | 45,0 |
| $H_2O$ | " | 54,1 | 50,1 |
| $NH_3$ | " | 4,0 | 4,2 |
| $F^-$ | " | 1,0 | 0,6 |
| andere | " | 0,4 | 0,1 |

Amorphes $SiO_2$ enthaltende Oxidgemische :

| | | III | IV | V | VI | VII | VIII | IX |
|---|---|---|---|---|---|---|---|---|
| $SiO_2$ | Gew.-% | 24,5 | 21,9 | 22,6 | 32,9 | 9,4 | 71,8 | 7,4 |
| $Al_2O_3$ | " | 64,2 | 68,0 | 59,2 | 60,4 | 78,1 | 14,2 | 85,7 |
| $Fe_2O_3$ | " | 3,3 | 5,0 | 3,2 | 0,2 | 2,6 | 3,8 | 0,3 |
| $Na_2O$ | " | 1,5 | 2,5 | 3,9 | 2,6 | 4,3 | 1,8 | 3,3 |
| $K_2O$ | " | 0,6 | 0,3 | 0,5 | 0,1 | 0,7 | 1,2 | 0,6 |
| Glühverlust | " | 2,4 | 1,1 | 3,2 | 2,9 | 1,3 | 2,7 | 2,1 |
| Rest | " | 3,5 | 0,2 | 7,4 | 0,9 | 3,6 | 4,5 | 0,6 |

## Beispiele 1 bis 8 (Gießmassen)

Aus den vorangehenden Komponenten wurden gießfähige Formmassen hergestellt, indem das KOH im Alkaliwasserglas unter Rühren gelöst wurde, die Mischung auf Raumtemperatur abgekühlt wurde und mit einer trockenen Vormischung aus dem Oxidgemisch, den Füllstoffen und gegebenenfalls wasserhaltiger amorpher Kieselsäure intensiv mit einem Vibrationsrührer vermischt wurden. Die erhaltene thixotrope Formmasse bildet unter Vibration eine gießfähige Masse, die unter Vibration in Formen gefüllt wurde.

Die mit der Gießmasse gefüllten Formen wurden bei 80 °C 2 Stunden in feuchter Atmosphäre gehärtet. Danach wurde entformt und an der Luft getrocknet.

Die Biegebruchfestigkeit (DIN 51030) wurde nach Härtung und dreitägiger Trocknung an der Luft gemessen.

Die Formkörper waren rißfrei, wiesen keine Schwindung auf und zeigten eine genaue Abbildung auch kleiner Einzelheiten der verwendeten Formen.

## Beispiel 9

Herstellung von Kaliwasserglas

Aus 567 g KOH (89,6 Gew.-% g), 346 g Wasser und 920 g einer amorphen dispers-pulverförmigen wasserhaltigen Kieselsäure der genannten Zusammensetzung II wird durch Lösen der KOH in der angeführten Menge Wasser unter Selbsterwärmen und Zugabe der genannten Menge der Kieselsäure in Portionen in einer Stunde unter Rühren und Erwärmen auf 110 °C die Kieselsäure zu 1,8 kg Kaliumsilikat-Lösung der Zusammensetzung 23,7 Gew.-% $K_2O$, 23,2 Gew.-% $SiO_2$ und 52,8 Gew.-% $H_2O$ gelöst.

Es entsteht eine etwas bräunliche, leicht getrübte Lösung. Das so hergestellte Kaliwasserglas wird anstelle von handelsmäßigem Kaliwasserglas der Beispiele 1 bis 8 eingesetzt:

(Siehe Tabellen Seite 9 ff.)

| Beispiele | | 1 | 2 | 3 | 4 | 5 | 6 | 7 | 8 |
|---|---|---|---|---|---|---|---|---|---|
| Kaliumsilikatlösung I | Gew.-Teile | 50 | – | 50 | 50 | 50 | – | 50 | 50 |
| Kaliumsilikatlösung II | " | – | 55 | – | – | – | – | – | – |
| Natriumsilikatlösung | " | – | – | – | – | – | 50 | – | – |
| KOH-Lösung 50 Gew.-% in $H_2O$ | " | 12,5 | 12,5 | 12,5 | 12,5 | 12,5 | – | 12,5 | 21 |
| NaOH-Lösung 50 Gew-% in $H_2O$ | " | – | – | – | – | – | 10 | – | – |
| $SiO_2$-Oxidgemisch III | " | – | – | 70 | – | – | – | 70 | – |
| " " IV | " | 70 | 60 | – | – | – | 35 | – | – |
| " " V | " | – | – | – | – | 90 | – | – | – |
| " " VI | " | – | – | – | – | – | – | – | 60 |
| " " VII | " | – | – | – | 50 | – | – | – | – |
| Quarzsand, Korngr. ⌀ 0,2 mm | " | 134 | – | 99 | 160 | 104 | 183 | – | 138 |
| Quarzmehl, " ⌀ ∠40 µm | " | 40 | – | 30 | 48 | 31 | 55 | – | 41 |
| Kaolin, trocken, gemahlen | " | – | 72 | – | – | – | – | – | – |
| Ton, trocken, gemahlen | " | – | – | 40 | – | 25 | – | 25 | – |
| Basaltsand,Korngr. ⌀ 0,09-0,6 mm | " | – | – | – | – | – | – | 146 | – |
| Basaltmehl," ⌀ ∠0,09 mm | " | – | – | – | – | – | – | 44 | – |
| Biegebruchfestigkeit (kg/cm$^2$) | | 270 | 220 | 230 | 180 | 230 | 200 | 110 | 150 |

0 148 280

| Beispiele | | 10 | 11 | 12 | 13 | 14 | 15 | 16 | 17 |
|---|---|---|---|---|---|---|---|---|---|
| Kaliumsilikatlösung Beisp. 9 | Gew.-Teile | 50 | 50 | 50 | 50 | 50 | 50 | 50 | 50 |
| KOH-Lösung 50 Gew.-% in $H_2O$ | " | – | – | – | – | – | 8 | – | 2 |
| $SiO_2$-Oxidgemisch III | " | 50 | 50 | – | – | – | – | 40 | – |
| " " IV | " | – | – | 45 | – | – | – | – | – |
| " " VI | " | – | – | – | – | – | – | – | 55 |
| " " VII | " | – | – | – | 50 | – | – | – | – |
| " " VIII | " | – | – | – | – | 50 | – | – | – |
| " " VIII | " | – | – | – | – | – | 40 | – | – |
| " " IX | " | – | – | – | – | – | 40 | – | – |
| wasserhaltige, disperse Kieselsäure I | " | – | – | – | – | – | – | 10 | – |
| Quarzsand, Korngr. Ø 0,2 mm | " | – | – | 69 | 81 | 76 | 139 | 92 | 44 |
| Quarzmehl, Korngr. Ø ∠40 μm | " | – | – | 20 | 25 | 23 | 41 | 28 | 13 |
| Kaolin, trocken, gemahlen | " | – | 29 | – | – | – | – | – | – |
| Basaltmehl, Korngr. Ø ∠0,09 mm | " | 54,5 | – | – | – | – | – | – | – |
| Biegebruchfestigkeit (kg/cm$^2$) | | 230 | 200 | 240 | 180 | 290 | 260 | 350 | 330 |

0 148 280

Biespiele 18 bis 21 (Preßmassen)

Die Herstellung der Preßmasse erfolgte entsprechend den Angaben in den Beispielen 1 bis 8, wobei jedoch ein feuchtes Pulver entsteht, das nicht durch Vibration gießfähig wird. Das Pulver wird in Formen gefüllt und unter 240 bar Druck zu 10 mm dicken Platten verpreßt. Die so gepreßten Platten werden ohne Härtung entformt und bei 80 °C 2 Stunden gehärtet. Die Formkörper sind rißfrei und formtreu und können gebohrt und mittels einer Trennscheibe ohne Splittern der Ränder geschnitten werden.

| Beispiel | | 18 | 19 | 20 | 21 |
|---|---|---|---|---|---|
| Kaliumsilikatlösung I | Gew.-Teile | 50 | - | - | - |
| Kaliumsilikatlösung Beispiel 9 | " | - | 50 | 50 | 50 |
| KOH-Lösung 50 % in $H_2O$ | " | 10 | 4 | - | - |
| $SiO_2$-Oxidgemisch IV | " | 60 | 60 | 60 | 60 |
| Quarzsand, Korngr.∅ 0,2 mm | " | 308 | - | - | - |
| Quarzmehl, Korngr.∅ ≼ 40 µm | " | 92 | - | - | 145 |
| Kaolin, trocken, gemahlen | " | - | 128 | - | - |
| Ton, trocken, gemahlen | " | - | - | 110 | - |
| Biegebruchfestigkeit ($kg/cm^2$) | | 150 | 130 | 160 | 180 |

Beispiele 22 bis 30

In den folgenden Beispielen wurden für Gießmassen und Preßmassen die folgenden Ausgangsstoffe verwendet :

Kaliumsilikatlösung I (Kaliwasserglas) :
26,6 Gew.-% $SiO_2$ 14,5 Gew.-% $K_2O$ und 58,9 Gew.-% $H_2O$
Kaliumsilikatlösung II (Kaliwasserglas) :
25,0 Gew.-% $SiO_2$ 13,6 Gew.-% $K_2O$ und 61,4 Gew.-% $H_2O$
Natriumsilikatlösung (Natronwasserglas) :
29,2 Gew.-% $SiO_2$ 8,8 Gew.-% $Na_2O$ und 62,0 Gew.-% $H_2O$

wasserhaltige disperse Kieselsäuren :

| | | I | II | III |
|---|---|---|---|---|
| $SiO_2$ | Gew.-% | 40,5 | 45,0 | 39,3 |
| $H_2O$ | " | 54,1 | 50,1 | 56,5 |
| $NH_3$ | " | 4,0 | 4,2 | - |
| $F^-$ | " | 1,0 | 0,6 | 1,7 |
| $Al_2O_3$ | " | - | - | 2,4 |
| andere | " | 0,4 | 0,1 | 0,1 |

Beispiele 22 bis 24 (Gießmassen)

Aus den folgenden Komponenten wurden gießfähige Formmassen hergestellt, indem das KOH im Alkaliwasserglas unter Rühren gelöst wurde, die Mischung auf Raumtemperatur abgekühlt wurde und mit einer trockenen Vormischung aus wasserhaltiger disperser Kieselsäure und den Füllstoffen intensiv mit einem Vibrationsrührer vermischt wurden. Die erhaltene krümelige Formmasse bildet unter Vibration eine gießfähige Masse, die unter Vibration in Formen gefüllt wurde.
Die mit der Gießmasse gefüllten Formen wurden bei 80 °C 2 Stunden durch Erwärmen angehärtet, wodurch eine « Grünfestigkeit » erreicht war, die die Entformung erlaubte. Darauf wurde bei 200 °C 1 Stunde ausgehärtet.

| Beispiel | | 22 | 23 | 24 |
|---|---|---|---|---|
| Kaliumsilikatlösung I | Gew.-Teile | 31 | 31 | - |
| Kaliumsilikatlösung II | " | - | - | 33,5 |
| KOH fest (84,8 Gew.-% g) | " | 10 | 10 | 10 |
| wasserhaltige disperse Kieselsäure III | " | 61 | 61 | 61 |
| Quarzsand Korngröße Ø 0,2 mm | " | 301 | - | - |
| Quarzmehl Korngröße unter 40 μm | " | 91 | 125 | 150 |
| Bauxit gemahlen | " | - | 5 | - |
| Biegebruchfestigkeit (kg/cm$^2$) | | 271 | 320 | 268 |

Die Biegebruchfestigkeit wurde nach der Aushärtung gemessen und steigt noch nach der Trocknung an der Luft.

Die Formkörper waren rißfrei, wiesen keine Schwindung auf und zeigten eine genaue Abbildung auch kleiner Einzelheiten der verwendeten Formen.

Beispiele 25 bis 27 (Preßmassen)

| Beispiel | | 25 | 26 | 27 |
|---|---|---|---|---|
| Kaliumsilikatlösung I | Gew.-Teile | 93 | 93 | 93 |
| KOH fest (84,5 Gew.-% g) | " | 30 | 30 | 30 |
| wasserhaltige disperse Kieselsäure I | Gew.-Teile | - | 130 | |
| wasserhaltige disperse Kieselsäure II | " | - | | 150 |
| wasserhaltige disperse Kieselsäure III | " | 91 | | |
| Glasmehl (Natronglas) 80 bis 150 μm | " | 174 | - | 100 |
| Glimmermehl Korngröße unter 0,2 mm | " | 300 | 400 | 50 |
| Tonerdehydrat | " | 92 | - | - |
| Biegebruchfestigkeit (kg/cm$^2$) | | 311 | 301 | 280 |

Die Herstellung der Preßmasse erfolgte entsprechend den Angaben in den Beispielen 22 bis 24, wobei jedoch ein feuchtes Pulver entsteht, das nicht durch Vibration gießfähig wird. Das Pulver wird in Formen gefüllt und unter 240 bar Druck zu 10 mm dicken Platten verpreßt. Die so gepreßten Platten werden ohne Härtung entformt und bei 100 °C 10 Stunden gehärtet. Die Formkörper sind rißfrei und formtreu und können, gebohrt und mittels einer Trennscheibe ohne Splittern der Ränder geschnitten werden.

Beispiel 29

Analog Beispiel 22 mit dem Unterschied, daß die Kaliumsilikatlösung I und das KOH fest durch 40 Gew.-Teile der Kaliumsilikatlösung aus Beispiel 9 ersetzt wurden.

Beispiel 30

Analog Beispiel 25 mit dem Unterschied, daß die Kaliumsilikatlösung I durch 100 Gew.-Teile des oben genannten Natronwasserglases ersetzt wurden und die Härtung bei 200 °C 7 Stunden erfolgte.

Beispiel 31

200 g einer kalialkalischen Lösung von wasserhaltiger amorpher Kieselsäure enthaltend 53 Gew.-% $H_2O$, 23,5 Gew.-% $SiO_2$ und 23,5 Gew.-% $K_2O$ werden mit 400 g eines Oxidgemischs mit Gehalten von 46 Gew.-% amorphem $SiO_2$ und 43 Gew.-% $Al_2O_3$ sowie $Fe_2O_3$ und weiteren Oxiden und als Schäummittel 15 g $NaBO_2 \cdot H_2O_2 \cdot 3\ H_2O$ homogen gemischt und in eine allseitig verschließbare Form von geeignetem Volumen gegossen. Die verschlossene Form wird auf ca. 80 °C aufgeheizt, wodurch Sauerstoff freigesetzt wird und die Masse aufgeschäumt. Der Formkörper ist in 30 Minuten gehärtet und kann entformt werden. Der entformte Schaumstoffkörper wird weitere 30 Minuten bei Temperaturen von 90 °C getrocknet. Die Dichte des offenporigen Schaums liegt bei 450 kg/m³.

## Beispiel 32

Eine Mischung wie in Beispiel 31 genannt wird auf die Rückseite einer keramischen Kachel, die in eine entsprechende Form eingelegt ist, gegossen und wie im Beispiel 31 beschrieben, gehärtet. Nach·der Entformung ist der Schaum mit der saugfähigen Rückseite der Kachel zu einem festen Verbundmaterial geworden, das die dekorative Vorderseite der Kachel und eine wärme- und schalldämmende Rückseite aufweist.

## Beispiel 33

70 g einer kalialkalischen Lösung von amorpher Kieselsäure, enthaltend 51 Gew.-% $H_2O$ mit einem $SiO_2/K_2O$ Molverhältnis von 2 : 1, werden mit 70 g eines Oxidgemisches, enthaltend 56 Gew.-% amorphes $SiO_2$, 37 Gew.-% $Al_2O_3$ sowie $Fe_2O_3$ und weitere Oxide, als Füllstoffe 120 g Quarzsand, 40 g Quarzmehl und 3 g Farbpigment auf Basis von $Fe_2O_3$ intensiv gemischt und in eine mit einer Strukturoberfläche versehene Eisenform gegossen. Gleich anschließend werden 250 g derselben kalialkalischen Lösung von amorpher Kieselsäure mit 250 g des genannten Oxidgemischs, 60 g feingemahlenem Perlite und 10 g $NaBO_2 \cdot H_2O_2 \cdot 3\ H_2O$ gut gemischt und auf die schaummittelfreie Masse in der gleichen Form gegossen. Nach Schließen der Form wird diese auf 85 °C erhitzt und nach 45 Minuten wieder geöffnet. Der entstandene Formkörper wird anschließend 1 Stunde bei 90 °C getrocknet. Er besteht aus einer eingefärbten auf der Sichtseite strukturierten massiven Vorderseite und einer aus anorganischem Schaum bestehenden Rückseite, die eine Dichte von 350 kg/m³ aufweist, während der massive Teil eine Dichte von 1 700 kg/m³ hat.

## Beispiel 34

Entsprechend Beispiel 33 mit den dort genannten Formmassen, jedoch mit dem Unterschied, daß die massive Masse in strukturierte Mehrfachformen gegossen und gehärtet wird, bevor die Schaummasse in einem zweiten Arbeitsgang zum Hinterschäumen der bereits gehärteten massiven Formteile verwendet wird. In einer Variante a) enthält die Mehrfachform voneinander durch Stege der Form getrennte massive Formkörper, die durch den Schaum miteinander verbunden sind, gemeinsam entformt werden und einen einzigen zu verwendenden Formkörper bilden. In einer Variante b) werden mehrere Formkörper gegossen, die jeder eine massive strukturierte Vorderseite und eine aus Schaum bestehende Rückseite aufweisen.

## Beispiel 35

150 g einer kalialkalischen Lösung von amorpher wasserhaltiger Kieselsäure mit einem Gehalt von 48 Gew.-% $H_2O$ mit einem $SiO_2/K_2O$ Molverhältnis von 1,5 : 1 werden mit 250 g eines Oxidgemischs mit Gehalten von 70 Gew.-% amorphem $SiO_2$ und geringen Gehalten von $Al_2O_3$ und weiteren Oxiden und als Treibmittel mit 0,5 g Aluminiumpulver (phlegmatisiert mit dem Ca-Salz einer Fettsäure) vermischt und in eine Form gegossen. Nach Schließen der Form bis auf eine kleine Bluteröffnung (zum Entweichen überschüssiger Gasmengen) wird durch Erhitzen auf 80 °C die Masse in 10 Minuten geschäumt und gehärtet. Nach dem Entformen wird bei 80 °C getrocknet. Der entstandene Schaum hat eine Dichte von 380 kg/m³.

## Beispiel 36

200 g einer kalialkalischen Lösung von amorpher Kieselsäure mit einem Gehalt von 52 Gew.-% Wasser mit einem $SiO_2/K_2O$ Molverhältnis von 2,2 : 1 und 200 g eines Oxidgemisches mit Gehalten von 20 Gew.-% amorphem $SiO_2$, 60 Gew.-% $Al_2O_3$ und weiteren Oxiden sowie 0,5 g unphlegmatisiertem Aluminiumpulver werden gemischt und sofort anschließend in eine Form gegossen. Durch die Reaktion des Aluminiums mit dem Alkali wird unter Erwärmung gleichzeitig Schaumbildung und Verfestigung bewirkt, die durch Nachheizen auf 60 °C nach 10 Minuten einen entformbaren Schaumkörper ergibt, der an der Luft nachgetrocknet wird.

## Beispiel 37

22,5 g wasserhaltige amorphe Kieselsäure mit einem Gehalt von 50 Gew.-% $SiO_2$, 17,5 g 90 Gew.-%ige KOH und 30 g Wasser werden aufgekocht und nach Abkühlen mit 100 g Quarzmehl als Füllstoff, 20 g 50 Gew.-%ige KOH-Lösung, 71 g wasserhaltiger amorpher Kieselsäure mit Gehalten von 50 Gew.-%

SiO$_2$ und 14,5 g NaBO$_2$ · H$_2$O$_2$ · 3H$_2$O gemischt, in eine Form gegossen und bei 85 °C 90 Minuten lang gehärtet. Nach dem Entformen wird der entstandene Schaumkörper 30 Minuten lang bei 85 °C erhitzt.

**Patentansprüche**

1. Wasserhaltige härtbare Formmassen aus anorganischen Bestandteilen in fließfähiger oder pressbarer Verteilung mit gegebenenfalls enthaltenen Anteilen von Füllstoffen, dadurch gekennzeichnet, daß die Formmasse je Gew.-Teile gelöstes SiO$_2$ 0,7 bis 2,5 Gew.-Teile K$_2$O bzw. 0,55 bis 1,5 Gew.-Teile Na$_2$O enthält, wobei K$_2$O bzw. Na$_2$O aus Alkalihydroxid, dessen wässriger Lösung und/oder einer wässrigen Lösung von Alkalisilikaten und gelöstes SiO$_2$ aus einer wässrigen Lösung von Alkalisilikaten stammt sowie 1,3 bis 10 Gew.-Teile Oxidgemisch mit Gehalten von amorphem SiO$_2$ und Aluminiumoxid und/oder ungelöstes SiO$_2$ aus einer amorphen dispers-pulverförmigen wasserhaltigen Kieselsäure und Wassergehalte bis zum Erreichen der Fließfähigkeit bzw. Preßbarkeit und ggf. Füllstoffgehalte bis zur Grenze der Fließfähigkeit, enthält.

2. Formmasse nach Anspruch 1, dadurch gekennzeichnet, daß im Falle der Verwendung von wässriger Lösung von Alkalisilikaten diese ganz oder teilweise durch Auflösen von amorpher dispers-pulverförmiger wasserhaltiger Kieselsäure in Alkalihydroxiden oder deren wässrigen Lösungen hergestellt werden.

3. Formmasse nach Anspruch 1, dadurch gekennzeichnet, daß 1,3 bis 7,5 Gew.-Teile ungelöstes SiO$_2$ eingesetzt sind.

4. Formmasse nach einem der Ansprüche 1 bis 3, dadurch gekennzeichnet, daß Schaummittel mit einer Temperatur der Gasbildung zwischen 20 und 95 °C enthalten sind.

5. Formmasse nach Anspruch 4, dadurch gekennzeichnet, daß als gasbildende Schäummittel Natriumperborat oder Aluminiumpulver enthalten sind.

6. Formmasse nach Anspruch 5, dadurch gekennzeichnet, daß 0,5 bis 4 Gew.-% Natriumperborat, bezogen auf die Formmasse, enthalten sind.

7. Formmasse nach Anspruch 5, dadurch gekennzeichnet, daß 0,05 bis 0,8 Gew.-% Aluminiumpulver, bezogen auf die Formmasse, enthalten sind.

8. Verfahren zur Herstellung von Formkörpern aus Formmassen nach einem der Ansprüche 1 bis 3, dadurch gekennzeichnet, daß eine fließfähige oder pressbare Masse mit Gehalten von 1,3 bis 10 Gew.-Teilen Oxidgemisch mit Gehalten von amorphem SiO$_2$ und Aluminiumoxid oder gegebenenfalls zum Teil SiO$_2$ aus wasserhaltiger amorpher Kieselsäure und 0,7 bis 2,5 Gew.-Teilen K$_2$O bzw. 0,55 bis 1,5 Gew.-Teilen Na$_2$O je 1 Gew.-Teil gelöstes SiO$_2$ sowie gegebenenfalls Füllstoffen, durch

a) Einmischung eines Siliciumdioxid und Aluminiumoxid enthaltenden Oxidgemischs und gegebenenfalls teilweise von amorpher wasserhaltiger Kieselsäure in wässrige Alkalisilikat-Lösung, die gegebenenfalls mit festem oder gelöstem Alkalihydroxid versehen wird oder

b) Auflösen von amorpher wasserhaltiger Kieselsäure in wässriger Alkalihydroxid-Lösung zu wässriger Alkalisilikat-Lösung und Zugabe des Oxidgemischs und gegebenenfalls weiterer Mengen von ungelöstem SiO$_2$ aus amorpher wasserhaltiger Kieselsäure oder

c) Vermischen von amorpher wasserhaltiger Kieselsäure mit Alkalihydroxid oder dessen wässriger Lösung und Reaktion des zu lösenden Anteils der Kieselsäure zu Alkalisilikat-Lösung und Zugabe des Oxidgemischs

hergestellt und in Formen gegossen bzw. eingeschüttet, entlüftet, gegebenenfalls verpresst und ausgehärtet wird.

9. Verfahren zur Herstellung von Formkörpern aus Formmassen nach einem der Ansprüche 1 bis 3, dadurch gekennzeichnet, daß eine fließfähige oder pressbare Masse mit Gehalten von 1,3 bis 7,5 Gew.-Teilen ungelöstem SiO$_2$ und 0,7 bis 2,5 Gew.-Teilen K$_2$O bzw. 0,55 bis 1,5 Gew.-Teilen Na$_2$O je 1 Gew.-Teil gelöstes SiO$_2$ sowie gegebenenfalls Füllstoffen, durch

a) Einmischung von amorpher wasserhaltiger Kieselsäure in wässrige Alkalisilikat-Lösung, die gegebenenfalls mit festem oder gelöstem Alkalihydroxid versehen wird oder

b) Auflösen von amorpher wasserhaltiger Kieselsäure in wässriger Alkalihydroxid-Lösung zu wässriger Alkalisilikat-Lösung und Zugabe weiterer Mengen von amorpher wasserhaltiger Kieselsäure als ungelöste SiO$_2$ oder

c) Vermischen der gesamten Menge von amorpher wasserhaltiger Kieselsäure mit Alkalihydroxid oder dessen wässriger Lösung und Reaktion des zu lösenden Anteils der Kieselsäure zu Alkalisilikat-Lösung

hergestellt und in Formen gegossen bzw. eingeschüttet, gegebenenfalls verpresst, entlüftet und ausgehärtet wird.

10. Verfahren zur Herstellung von Formkörpern aus Formmassen nach einem der Ansprüche 4 bis 7, dadurch gekennzeichnet, daß eine fließfähige Masse mit Gehalten von 1,5 bis 10 Gew.-Teilen Oxidgemisch mit Gehalten von amorphem SiO$_2$, und Aluminiumoxid und 0,7 bis 2,5 Gew.-Teilen K$_2$O bzw. 0,55 bis 1,5 Gew.-Teilen Na$_2$O je 1 Gew.-Teil gelöstes SiO, eines Schäummittels sowie gegebenenfalls Füllstoffen, durch

a) Einmischung eines amorphen SiO$_2$ und Aluminiumoxid enthaltenden Oxidgemischs und gegebenenfalls teilweise von amorpher wasserhaltiger Kieselsäure in wässrige Alkalisilikat-Lösung, die gegebenenfalls mit festem oder gelöstem Alkalihydroxid versehen wird oder

b) Auflösen von amorpher wasserhaltiger Kieselsäure in wässriger Alkalihydroxid-Lösung zu wässriger Alkalisilikat-Lösung und Zugabe des Oxidgemischs und gegebenenfalls von $SiO_2$ aus amorpher wasserhaltiger Kieselsäure oder

c) Vermischen von amorpher wasserhaltiger Kieselsäure mit Alkalihydroxid oder dessen wässriger Lösung und Reaktion des zu lösenden Anteils der Kieselsäure zu Alkalisilikat-Lösung und Zugabe des Oxidgemischs

hergestellt und in Formen geschüttet bzw. gegossen geschäumt und ausgehärtet wird.

11. Verfahren nach einem der Ansprüche 8 bis 10, dadurch gekennzeichnet, daß durch Auflösen von amorpher wasserhaltiger Kieselsäure in Alkalihydroxid oder dessen Lösungen eine Alkalisilikat-Lösung vor der Zufügung der weiteren Komponenten der Formmasse hergestellt wird.

12. Verfahren nach einem der Ansprüche 8 bis 11, dadurch gekennzeichnet, daß die in Formen gegossenen Formmassen bei Temperaturen von 50 bis 200 °C gehärtet werden.

13. Verfahren nach Anspruch 12, dadurch gekennzeichnet, daß eine Anhärtung bei 50 bis 150 °C, nach Erreichen der erforderlichen Festigkeit eine Ausformung und darauf eine Aushärtung bei 80 bis 200 °C vorgenommen wird.

14. Verfahren nach einem der Ansprüche 8 bis 12, dadurch gekennzeichnet, daß Formkörper anteilig aus einer geschäumten Formmasse und einer damit verbundenen nicht geschäumten Formmasse hergestellt werden, wobei die Vorgänge nacheinander oder gleichzeitig erfolgen können.

**Claims**

1. Water containing hardenable moulding compositions of inorganic constituents in pourable or compressible dispersion optionally with quantities of fillers contained therein, characterised in that the moulding composition contains, per part by weight of dissolved $SiO_2$, 0.7 to 2.5 parts by weight of $K_2O$ or 0.55 to 1.5 parts by weight of $Na_2O$, with $K_2O$ or $Na_2O$ originating from alkali hydroxide, from aqueous solution thereof and/or from an aqueous solution of alkali silicates and dissolved $SiO_2$ originating from an aqueous solution of alkali silicates, as well as 1.3 to 10 parts by weight of an oxide mixture with contents of amorphous $SiO_2$ and aluminium oxide and/or undissolved $SiO_2$ from a dispersed amorphous water containing silicic acid powder and water content up to what is necessary for achieving flowability or compressibility and optionally filler contents up to the limit for flowability.

2. Moulding composition according to Claim 1, characterised in that, in the case of the use of an aqueous solution of alkali silicates, these are produced completely or partially by dissolution of dispersed amorphous water-containing silicic acid powder in alkali hydroxides or aqueous solutions thereof.

3. Moulding composition according to claim 1, characterised in that 1.3 to 7.5 parts by weight of undissolved $SiO_2$ are employed.

4. Moulding composition according to one of claims 1 to 3, characterised by containing foaming agents with a gas formation temperature between 20 and 95 °C.

5. Moulding composition according to claim 4, characterised by containing sodium perborate or aluminium powder as gas forming foaming agent.

6. Moulding composition according to claim 5, characterised by containing 0.5 to 4 % by weight sodium perborate related to the moulding composition.

7. Moulding composition according to claim 5, characterised by containing 0.05 to 0.8 % by weight aluminium powder related to the moulding composition.

8. Process for the production of shaped bodies from moulding compositions according to one of claims 1 to 3, characterised in that a flowable or extrudable composition with contents of 1.3 to 10 parts by weight of oxide mixture with contents of amorphous $SiO_2$ and aluminium oxide or, optionally, the $SiO_2$ originating in part from water-containing amorphous silicic acid, and 0.7 to 2.5 parts by weight $K_2O$ or 0.55 to 1.5 parts by weight $Na_2O$ per 1 part by weight of dissolved $SiO_2$, as well as optionally fillers, is produced by

a) mixing a silicon dioxide and aluminium oxide-containing oxide mixture which consists optionally partially of amorphous water-containing silicic acid into aqueous alkali silicate solution, which is optionally provided with solid or dissolved alkali hydroxide, or

b) dissolution of amorphous water-containing silicic acid in aqueous alkali hydroxide solution to form aqueous alkali silicate solution and addition of the oxide mixture and optionally further amounts of undissolved $SiO_2$ from amorphous water containing silicic acid, or

c) mixing of amorphous water-containing silicic acid with alkali hydroxide or an aqueous solution thereof and reaction of the amount of the silicic acid being dissolved to form alkali silicate solution, and addition of the oxide mixture,

and the composition is poured or charged into moulds, deaerated, optionally compressed and hardened.

9. Process for the production of shaped bodies from moulding compositions according to one of claims 1 to 3, characterised in that a flowable or compressible composition with contents of 1.3 to 7.5 parts by weight of undissolved $SiO_2$ and 0.7 to 2.5 parts by weight $K_2O$ or 0.55 to 1.5 parts by weight $Na_2O$

per 1 part by weight of dissolved $SiO_2$, as well as optionally fillers, is produced by

a) mixing of amorphous water-containing silicic acid into aqueous silicate solution which is optionally provided with solid or dissolved alkali hydroxide, or

b) dissolution of amorphous water-containing silicic acid in aqueous alkali hydroxide solution to form aqueous alkali silicate solution and addition of further amounts of amorphous water-containing silicic acid as undissolved $SiO_2$, or

c) mixing of the entire amount of amorphous water-containing silicic acid with alkali hydroxide or an aqueous solution thereof and reaction of the dissolving amount of silicic acid to form alkali silicate solution,

and the composition is poured or charged into moulds, optionally compressed, deaerated and hardened.

10. Process for the production of shaped bodies from moulding compositions according to one of claims 4 to 7, characterised in that a flowable composition with contents of 1.5 to 10 parts by weight of oxide mixture with contents of amorphous $SiO_2$ and aluminium oxide and 0.7 to 2.5 parts by weight $K_2O$ or 0.55 to 1.5 parts by weight $Na_2O$ per 1 part by weight of dissolved $SiO_2$, a foaming agent as well as optionally fillers is produced by

a) mixing of an amorphous $SiO_2$ and aluminium oxide-containing oxide mixture and optionally, in part, amorphous water-containing silicic acid into aqueous alkali silicate solution, which optionally is provided with solid or dissolved alkali hydroxide, or

b) dissolution of amorphous water-containing silicic acid in aqueous alkali hydroxide solution to form aqueous alkali silicate solution and addition of the oxide mixture and optionally of $SiO_2$ from amorphous water-containing silicic acid, or

c) mixing of amorphous water-containing silicic acid with alkali hydroxide or an aqueous solution thereof and reaction of the amount of silicic acid being dissolved to form alkali silicate solution, and addition of the oxide mixture

and the composition is charged or poured into moulds, foamed and hardened.

11. Process according to one of claims 8 to 10, characterised in that an alkali silicate solution is produced by the dissolution of amorphous water-containing silicic acid in alkali hydroxide or a solution thereof before the supply of the further components of the moulding composition.

12. Process according to one of claims 8 to 11, characterised in that the moulding compositions poured into moulds are hardened at temperatures of 50 to 200 °C.

13. Process according to claim 12, characterised in that there is carried out a hardening at 50 to 150 °C, a shaping after achieving the necessary strength and then a curing at 80 to 200 °C.

14. Process according to one of claims 8 to 12, characterised in that shaped bodies are produced in portions from a foamed moulding composition and from an unfoamed moulding composition not connected therewith, with the procedures being able to take place after one another or simultaneously.

## Revendications

1. Matières durcissables à mouler, hydratées, formées de constituants minéraux présents en une répartition permettant la fluidité ou la compressibilité, et contenant éventuellement des charges, matières caractérisées en ce que la matière à mouler contient, pour chaque partie en poids de $SiO_2$ dissous, 0,7 à 2,5 parties en poids de $K_2O$ ou 0,55 à 1,5 partie en poids de $Na_2O$, $K_2O$ ou $Na_2O$ provenant d'un hydroxyde alcalin dont la solution aqueuse et/ou d'une solution aqueuse de silicates alcalins et de $SiO_2$ dissous provenant d'une solution aqueuse de silicates alcalins, ainsi que 1,3 à 10 parties en poids d'un mélange d'oxydes contenant du $SiO_2$ amorphe et de l'oxyde d'aluminium et/ou du $SiO_2$ non dissous provenant d'un acide silicique hydraté pulvérulent dispersé amorphe, et des teneurs en eau permettant d'atteindre la fluidité ou la compressibilité, et éventuellement des proportions de charge(s) jusqu'à la limite de la fluidité.

2. Matière à mouler selon la revendication 1, caractérisée en ce qu'en cas d'utilisation de solutions aqueuses de silicates alcalins, celles-ci sont préparées entièrement ou partiellement par dissolution d'un acide silicique hydraté pulvérulent amorphe dispersé dans des hydroxydes alcalins ou dans leurs solutions aqueuses.

3. Matière à mouler selon la revendication 1, caractérisée en ce qu'on utilise 1,3 à 7,5 parties en poids de $SiO_2$ non dissous.

4. Matière à mouler selon l'une des revendications 1 à 3, caractérisée en ce qu'elle contient un agent moussant dont la température de formation de gaz se situe entre 20 et 95 °C.

5. Matière à mouler selon la revendication 4, caractérisée en ce qu'elle contient, comme agent moussant générateur de gaz, du perborate de sodium ou de la poudre d'aluminium.

6. Matière à mouler selon la revendication 5, caractérisée en ce qu'elle contient 0,5 à 4 % en poids de perborate de sodium, par rapport à la matière à mouler.

7. Matière à mouler selon la revendication 5, caractérisée en ce qu'elle contient 0,05 à 0,8 % en poids de poudre d'aluminium, par rapport à la matière à mouler.

8. Procédé de préparation d'objets moulés à partir de matières à mouler selon l'une des revendications 1 à 3, caractérisé en ce qu'on prépare une matière fluide ou compressible, contenant 1,3 à 10 parties en poids d'un mélange d'oxydes contenant du $SiO_2$ amorphe et de l'oxyde d'aluminium ou éventuellement en partie $SiO_2$ provenant d'acide silicique amorphe hydraté et 0,7 à 2,5 parties en poids de $K_2O$ ou 0,55 à 1,5 partie en poids de $Na_2O$ pour chaque partie en poids de $SiO_2$ dissous ainsi qu'éventuellement des charges, par :

a) incorporation par mélange d'un mélange d'oxydes contenant du bioxyde de silicium et de l'oxyde d'aluminium et éventuellement, en partie, de l'acide silicique hydraté amorphe dans une solution aqueuse de silicate alcalin qui comporte éventuellement un hydroxyde alcalin solide ou dissous, ou

b) dissolution d'acide silicique hydraté amorphe dans une solution aqueuse d'un hydroxyde alcalin pour obtenir une solution aqueuse de silicate alcalin et addition du mélange d'oxydes et éventuellement d'autres quantités de $SiO_2$ non dissous provenant d'acide silicique hydraté amorphe, ou

c) mélange d'acide silicique hydraté amorphe avec un hydroxyde alcalin ou sa solution aqueuse et réaction de la partie d'acide silicique à dissoudre pour obtenir une solution de silicate alcalin et addition du mélange d'oxydes, et

on verse la matière dans des moules ou on l'y fait couler, on désaère, éventuellement on comprime et l'on fait durcir.

9. Procédé de préparation d'objets moulés à partir de matières à mouler selon l'une des revendications 1 à 3, caractérisé en ce qu'on prépare une matière fluide ou compressible contenant 1,3 à 7,5 parties en poids de $SiO_2$ non dissous et 0,7 à 2,5 parties en poids de $K_2O$ ou 0,55 à 1,5 partie en poids de $Na_2O$ pour chaque partie en poids de $SiO_2$ dissous, ainsi qu'éventuellement des charges, par

a) incorporation par mélange d'un acide silicique hydraté aqueux amorphe dans une solution aqueuse de silicate alcalin, qui comporte éventuellement un hydroxyde alcalin solide ou dissous, ou

b) dissolution d'un acide silicique aqueux amorphe dans une solution aqueuse d'un hydroxyde alcalin pour obtenir une solution aqueuse de silicate alcalin et addition de quantités supplémentaires d'acide silicique hydraté amorphe sous forme de $SiO_2$ non dissous, ou

c) mélange de la quantité totale d'acide silicique hydraté amorphe avec de l'hydroxyde alcalin ou sa solution aqueuse et réaction de la fraction d'acide silicique à dissoudre pour obtenir une solution de silicate alcalin, et l'on verse dans des moules ou fait couler dans des moules, éventuellement on comprime, on désaère et fait durcir.

10. Procédé de préparation d'objets moulés à partir des matières à mouler selon l'une quelconque des revendications 4 à 7, caractérisé en ce qu'on prépare une matière fluide contenant 1,5 à 10 parties en poids d'un mélange d'oxydes contenant du $SiO_2$ amorphe et de l'oxyde d'aluminium, et 0,7 à 2,5 parties en poids de $K_2O$ ou 0,55 à 1,5 parties en poids de $Na_2O$ pour chaque partie en poids de $SiO_2$ dissous, un agent moussant ainsi qu'éventuellement des charges, par

a) incorporation d'un mélange d'oxydes contenant du $SiO_2$ amorphe et de l'oxyde d'aluminium et éventuellement en partie de l'acide silicique hydraté amorphe dans une solution aqueuse de silicate alcalin, qui comporte éventuellement un hydroxyde alcalin solide ou dissous, ou

b) dissolution d'un acide silicique hydraté amorphe dans une solution aqueuse d'un hydroxyde alcalin pour obtenir une solution aqueuse de silicate alcalin et addition du mélange des oxydes et éventuellement de $SiO_2$ provenant d'un acide silicique aqueux amorphe, ou

c) mélange d'un acide silicique hydraté amorphe avec de l'hydroxyde alcalin ou sa solution aqueuse et réaction de la fraction à dissoudre de l'acide silicique pour obtenir une solution de silicate alcalin, et addition du mélange des oxydes,

et on verse ou fait couler dans des moules, on fait mousser et durcir.

11. Procédé selon l'une des revendications 8 à 10, caractérisé en ce que, par dissolution d'acide silicique aqueux amorphe dans de l'hydroxyde alcalin ou dans ses solutions, on prépare une solution de silicate alcalin avant d'introduire les autres constituants de la matière à mouler.

12. Procédé selon l'une des revendications 8 à 11, caractérisé en ce qu'on fait durcir à des températures de 50 à 200 °C les matières à mouler versées dans les moules.

13. Procédé selon la revendication 12, caractérisé en ce qu'on effectue un début de durcissement des températures de 50 à 150 °C, une fois atteinte la résistance nécessaire, on opère un démoulage et l'on produit ensuite un durcissement à des températures de 80 à 200 °C.

14. Procédé selon l'une des revendications 8 à 12, caractérisé en ce qu'on prépare les objets moulés en partie à partir d'une matière à mouler ayant moussé et d'une matière à mouler qui y est liée mais n'a pas moussé, les opérations pouvant être réalisées successivement ou simultanément.

Fig.1

1

2

2

Fig.2

Fig.3

1

3

2